# FASCICULE DE BREVET EUROPEEN

(11) **EP 0 757 901 B1**
(45) Date de publication et mention de la délivrance du brevet: **15.04.1998**
(21) Numéro de dépôt: 96420228.7
(22) Date de dépôt: 03.07.1996
(51) Int. Cl.: A47J 37/12

(54) **Friteuse électrique**
Elektrisches Fritiergerät
Electrical fryer

(30) Priorité: 08.08.1995 FR 9509787
(43) Date de publication de la demande: 12.02.1997
(73) Titulaire: ETS MORICE ET CIE TRAITOGAZ, F-01700 Miribel (FR)
(72) Inventeur: Aldeguer, René, 69660 Collonges au Mont d'Or (FR); Bellement, Christophe, 69330 Meyzieu (FR)
(74) Mandataire: Bratel, Gérard

(56) Documents cités:
- EP-A- 0 259 056
- EP-A- 0 295 159
- DE-A- 3 143 863
- GB-A- 2 205 731
- US-A- 2 749 427
- US-A- 2 753 436

## Description

La présente invention concerne une friteuse électrique d'après le préambule de la revendication 1 (voir US-A-2753436), et elle se rapporte, plus particulièrement, à la cuve qui, dans une telle friteuse, reçoit un bain d'huile chauffé par des résistances électriques.

Les friteuses électriques traditionnelles ne respectent pas les règles d'hygiène alimentaire, à cause des impératifs de fabrication. En effet, les cuves de ces friteuses sont mécano-soudées et comportent, par conséquent, des angles vifs et des soudures irrégulières à la jonction de leurs différentes faces, ce qui rend les opérations de nettoyage particulièrement difficiles.

De plus, les dispositifs de chauffage des friteuses électriques sont souvent réalisés avec des résistances blindées de géométrie complexe, qui visent à limiter les charges en W/cm², mais qui sont de ce fait, elles aussi, pratiquement impossibles à nettoyer. Il arrive souvent qu'autour des résistances, l'huile carbonise et provoque ainsi une détérioration rapide du bain d'huile.

Lorsque le dispositif de chauffage, réalisé sous la forme d'un groupe de résistances, est fixé sur un boîtier de raccordement électrique, ce dernier est d'une part non conforme aux exigences des règles officielles concernant l'hygiène alimentaire, et d'autre part il est exposé aux éclaboussures d'huile et aux dégagements de vapeurs grasses, ce qui peut endommager les circuits électriques.

Enfin les friteuses électriques conventionnelles ont leurs dispositifs de régulation et de sécurité immergés dans l'huile, ce qui a pour inconvénient de former des cavités dans lesquelles l'huile se loge et ne peut plus être éliminée.

L'invention vise à éliminer tous les inconvénients précédemment évoqués, donc à fournir une friteuse électrique dont toutes les parties au contact de l'huile peuvent être aisément nettoyées, et ne comportent aucun point où l'huile ou d'autres matières puissent stagner, de manière à satisfaire scrupuleusement les règles d'hygiène alimentaire, cette friteuse possédant par ailleurs des performances thermiques améliorées.

A cet effet, dans la friteuse électrique objet de la présente invention telle que définie dans la revendication 1, la cuve recevant le bain d'huile possède, au moins intérieurement, une surface entièrement lisse et ne comportant aucune arête vive, les résistances électriques de chauffage étant noyées dans l'épaisseur de la paroi de la cuve.

Ainsi, l'invention repose essentiellement sur le choix de la géométrie des parois de la cuve, dont toute la surface intérieure résulte de portions planes ou possédant des rayons de courbure relativement importants, ce qui facilite le nettoyage et évite tout dépôt d'huile, la surface intérieure de la cuve ne comportant ni arête vive, ni partie rentrante et étant ainsi particulièrement accessible. De plus, l'incorporation des résistances chauffantes dans la paroi de la cuve supprime tout problème de nettoyage de ces résistances.

La cuve de la friteuse électrique, objet de l'invention, est réalisée par moulage, en un métal ou alliage de qualité alimentaire et bon conducteur de la chaleur, tel qu'aluminium. D'une part, la fabrication par moulage permet l'obtention aisée et directe des formes souhaitées pour la cuve, avec des rayons de courbure importants, toute soudure étant naturellement supprimée par ce procédé. D'autre part, la réalisation de la cuve en aluminium ou similaire permet une bonne conduction thermique et une bonne répartition de la chaleur, dégagée par les résistances noyées dans la paroi de cette cuve.

Avantageusement, la surface intérieure de la cuve est recouverte d'un film anti-adhérent et excellent conducteur thermique, par exemple un film à base de polytétrafluoréthylène (PTFE). Ce film contribue à l'état de surface intérieur de la cuve en vue de faciliter le nettoyage et d'éviter les dépôts d'huile, sans s'opposer au transfert de chaleur depuis les parois de la cuve vers le bain d'huile. De plus, le film assure une parfaite étanchéité, alors que l'aluminium moulé des parois de la cuve peut être poreux.

Selon l'invention, les parois de la cuve comportent, dans la région du fond de cette cuve, au moins une partie d'épaisseur fortement augmentée, dans laquelle sont noyées les résistances électriques de chauffage. La partie d'épaisseur fortement augmentée recevant les résistances électriques se présente comme un bloc central fixe ou amovible, faisant saillie vers le haut à partir du fond de la cuve, sensiblement sur toute sa longueur, entre deux parois inférieures de profil arrondi reliant le bloc central aux flancs de la cuve. La cuve est ainsi partagée en deux zones de cuisson, symétriques l'une de l'autre par rapport à un plan médian vertical, les résistances chauffantes étant placées en position optimale entre les deux zones de cuisson, les formes arrondies de ces zones améliorant la convection de l'huile.

Le bloc central, pouvant venir directement de montage avec la cuve, transmet donc l'énergie thermique, dégagée par les résistances qu'il renferme, à l'huile située dans la cuve, ce bloc central présentant une surface d'échange thermique importante avec le bain d'huile. Avantageusement, le bloc central comporte au moins un évidement, notamment un évidement s'étendant en direction longitudinale, dans le but de diminuer sa masse de matière afin de limiter les phénomènes d'inertie thermique.

Pour la vidange de la cuve, on prévoit de préférence un collecteur à deux entrées situées respectivement sur les deux parois inférieures arrondies qui s'étendent de part et d'autre du bloc central, le collecteur surmontant une vanne de vidange. Ce collecteur de vidange se situe avantageusement vers une extrémité de la cuve, auquel cas le fond de ladite cuve est légèrement incliné sur l'horizontale, en s'abaissant vers l'extrémité de la cuve pourvue du collecteur de vidange, pour permettre l'écoulement aisé de l'huile lors de la vidange.

Avantageusement, la cuve est entourée extérieurement d'un revêtement isolant thermique, afin de limiter les déperditions thermiques vers l'extérieur, ce qui contribue à accroître le rendement global de la friteuse.

Selon une autre caractéristique de l'invention, le bloc central dans lequel sont noyées les résistances électriques de chauffage loge aussi des moyens de détection et régulation de température du bain d'huile et/ou des moyens de sécurité thermique, connectés fonctionnellement aux résistances électriques de chauffage. Cette disposition complémentaire supprime les dispositifs classiques de régulation et de sécurité immergés dans l'huile. Les moyens de détection et régulation de température du bain d'huile et/ou les moyens de sécurité thermique peuvent être logés dans l'évidement longitudinal du bloc central, et/ou dans des réservations spéciales.

En particulier, les moyens de détection et régulation de température peuvent comprendre un détecteur de température avec sonde de température placée à l'intérieur de l'évidement longitudinal du bloc central, la sonde étant solidaire d'un embout bon conducteur thermique, affleurant la surface du bloc central et entouré d'une entretoise annulaire isolante, l'embout et l'entretoise prenant place dans une cavité du bloc central. Un tel dispositif de détection de la température est conçu de telle sorte que la mesure de température du bain d'huile ne soit pas influencée par le bloc central, tout en conservant une surface lisse du bloc central au droit du détecteur.

Dans l'ensemble, on obtient donc une friteuse électrique qui, tout en présentant d'excellentes performances thermiques, possède une cuve facilement nettoyable et ne présente aucune partie donnant lieu à des dépôts d'huile ou à l'accrochage d'autres matières. Les exigences d'hygiène alimentaire peuvent ainsi être rigoureusement respectées. A ce sujet, on notera encore que le support de paniers, posé dans la cuve, respecte les mêmes exigences que cette cuve.

De toute façon, l'invention sera mieux comprise à l'aide de la description qui suit, en référence au dessin schématique annexé représentant, à titre d'exemple, une forme de réalisation de cette friteuse électrique :
Figure 1 est une vue d'ensemble, en perspective avec parties arrachées, d'une friteuse électrique conforme à la présente invention ;
Figure 2 est une vue partielle en coupe transversale, à échelle agrandie, de la friteuse de figure 1.

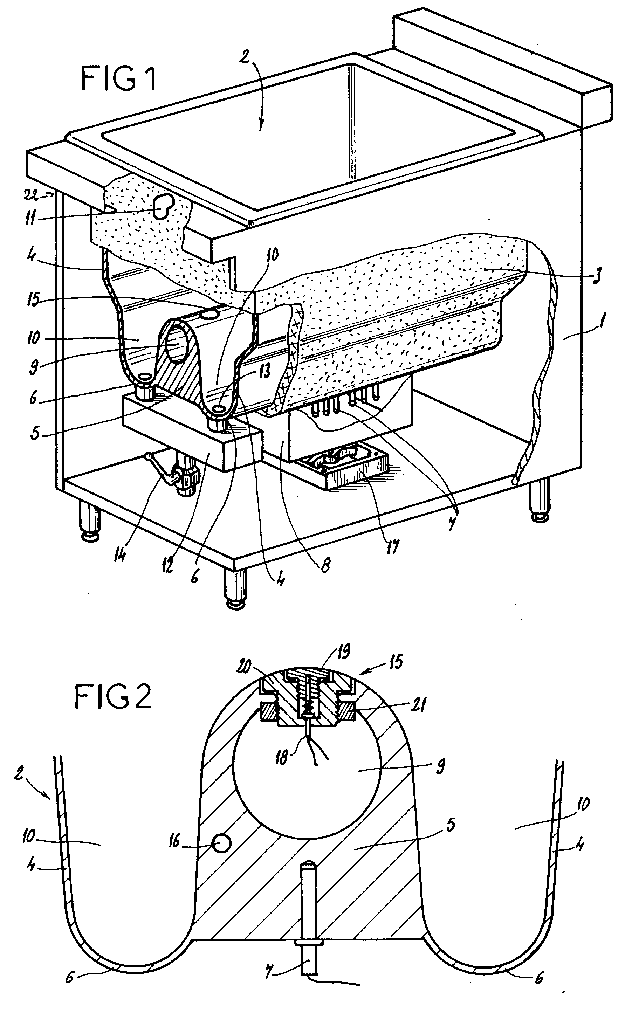

La friteuse électrique représentée sur la figure 1 comprend, à l'intérieur d'un caisson 1, une cuve 2 ouverte à sa partie supérieure et recouverte extérieurement d'un revêtement isolant thermique 3, limitant les pertes dans le but d'accroître le rendement.

La cuve 2, moulée en aluminium, possède vue en coupe transversale la forme générale d'un "W". Ainsi on distingue les deux flancs 4 de la cuve, sa partie centrale 5 en forme de bloc, et deux parois inférieures 6 reliant chacune la base de l'un des flancs 4 au bloc central 5.

Cette cuve 2 est entièrement lisse intérieurement, et tous ses angles sont arrondis. En particulier, le bloc central 5 et les deux parois inférieures 6 possèdent des profils arrondis, visibles plus en détail à la figure 2. L'intérieur de la cuve 2 est recouvert d'un film anti-adhérent, excellent conducteur thermique, réalisé à base de polytétrafluoréthylène (PTFE).

Le bloc central 5 de la cuve 2 constitue l'émetteur thermique, dans lequel sont disposées des résistances électriques chauffantes blindées 7 dont les connexions sont logées dans un boîtier de protection 8. Dans ce bloc central 5 de la cuve 2 est ménagé un évidement longitudinal 9, qui diminue la masse de matière afin de limiter les phénomènes d'inertie thermique.

Les deux parties internes 10 de la cuve 2, situées de part et d'autre du bloc central 5, forment deux zones de cuisson. Les formes arrondies de ces zones 10, en particulier les parois inférieures 6 arrondies qui les limitent, améliorent la convection de l'huile.

Un conduit 11 pour le remplissage en huile de la cuve 2 est situé sur l'avant de cette cuve 2, en partie haute. Pour la vidange de la cuve 2, il est prévu à une extrémité de la cuve 2 un collecteur 12 à deux entrées 13 situées, respectivement, sur les parois inférieures 6 au fond des deux zones de cuisson 10, ainsi qu'une vanne de vidange 14 montée sous le collecteur 12. Le fond de la cuve 2 est légèrement incliné vers l'avant, pour permettre un écoulement aisé de l'huile vers les entrées 13 du collecteur 12, lors de la vidange.

Dans le bloc central 5 sont encore implantés deux dispositifs de détection de température 15 et 16, l'un pour la régulation de température pendant le fonctionnement normal, et l'autre pour la sécurité thermique en cas de fonctionnement anormal, par exemple en cas de fonctionnement à vide. La sécurité thermique a aussi pour rôle de refroidir la cuve 2 en cas de dépassement d'un seuil de température critique, par exemple de l'ordre de 290°C ; cette fonction est assurée par un ventilateur 17 situé sous la cuve 2.

En se référant à la figure 2, on décrit maintenant le détail du dispositif de détection de température 15 intervenant en fonctionnement normal. Ce dispositif 15 comprend une sonde de température 18, placée à l'intérieur de l'évidement longitudinal 9 du bloc central 5. La sonde de température 18 est solidaire d'un embout central en aluminium 19, entouré par une entretoise annulaire 20 isolante, notamment en polytétrafluoréthylène (PTFE), l'embout 19 et l'entretoise 20 prenant place dans une cavité du bloc central 5, et s'y trouvant retenus par un écrou 21. L'entretoise 20 isole l'embout central 19, de sorte que la mesure de température ne soit pas influencée par le bloc central 5, l'embout central 19 se trouvant au contact direct de l'huile contenue dans la cuve 2, et ayant la capacité de transmettre rapidement la température de cette huile à la sonde 18, puisque cet embout 19 est en aluminium.

La figure 2 montre aussi la localisation, dans le bloc central 5, d'un trou recevant l'autre dispositif de détection de température 16, à fonction de sécurité thermique.

Les organes de commande de la friteuse, non représentés en détail, sont regroupés en façade comme indiqué globalement en 22.

la friteuse est équipée, en option, d'un dispositif de relevage automatique des paniers, ainsi que d'un dispositif de filtrage automatique.

La friteuse électrique, précédemment décrite, est plus particulièrement utilisable en tant que friteuse pour collectivités, ou pour petite et moyenne restauration.

Comme il va de soi, l'invention ne se limite pas à la seule forme de réalisation de cette friteuse électrique qui a été décrite ci-dessus, à titre d'exemple ; elle en embrasse, au contraire, toutes les variantes respectant le même principe, quel que soit notamment le détail des formes de la cuve et des organes de régulation et de sécurité, et quelles qu'en soient les particularités constructives. C'est ainsi, notamment, que le bloc central peut être fixe ou amovible.

## Revendications

1. Friteuse électrique, comprenant une cuve recevant un bain d'huile et des résistances électriques pour le chauffage du bain d'huile, la cuve (2) étant réalisée par moulage, en un métal ou en alliage de qualité alimentaire et bon conducteur de la chaleur, tel qu'aluminium, et cette cuve possédant, au moins intérieurement, une surface entièrement lisse ne comportant aucune arête vive, les résistances électriques de chauffage (7) étant noyées dans l'épaisseur de la paroi (5) de la cuve (2), les parois de ladite cuve (2) comportant, dans la région du fond de cette cuve (2), au moins une partie (5) d'épaisseur fortement augmentée, dans laquelle sont noyées les résistances électriques de chauffage (7), caractérisée en ce que la partie d'épaisseur fortement augmentée, recevant les résistances électriques de chauffage (7), se présente comme un bloc central (5) fixe ou amovible, faisant saillie vers le haut à partir du fond de la cuve (2), sensiblement sur toute sa longueur entre deux parois inférieures (6) de profil arrondi reliant le bloc central (5) aux flancs (4) de la cuve (2), qui est ainsi partagée en deux zones de cuisson (10).

2. Friteuse électrique selon la revendication 1, caractérisée en ce que le bloc central (5) comporte au moins un évidement (9), notamment un évidement s'étendant en direction longitudinale.

3. Friteuse électrique selon la revendication 1 ou 2, caractérisée en ce qu'elle comprend un collecteur de vidange (12) à deux entrées (13) situées respectivement sur les deux parois inférieures arrondies (6) qui s'étendent de part et d'autre du bloc central (5), le collecteur (12) surmontant une vanne de vidange (14).

4. Friteuse électrique selon l'une quelconque des revendications 1 à 3, caractérisée en ce que le bloc central (5), dans lequel sont noyées les résistances électriques de chauffage (7), loge aussi des moyens (15) de détection et régulation de température du bain d'huile et/ou des moyens (16) de sécurité thermique, connectés fonctionnellement aux résistances électriques de chauffage (7).

5. Friteuse électrique selon l'ensemble des revendications 2 et 4, caractérisé en ce que les moyens (15) de détection et régulation de température et/ou les moyens (16) de sécurité thermique sont logés dans l'évidement longitudinal (9) du bloc central (5), et/ou dans des réservations spéciales.

6. Friteuse électrique selon la revendication 5, caractérisé en ce que les moyens (15) de détection et régulation de température comprennent un détecteur de température avec sonde de température (18) placée à l'intérieur de l'évidement longitudinal (9) du bloc central (5), la sonde (18) étant solidaire d'un embout (19) bon conducteur thermique, affleurant la surface du bloc central (5) et entouré d'une entretoise annulaire (20) isolante, l'embout (19) et l'entretoise (20) prenant place dans une cavité du bloc central (5).

7. Friteuse électrique selon la revendication 3, caractérisée en ce que le collecteur de vidange (12) se situe vers une extrémité de la cuve (2), le fond de ladite cuve (2) étant légèrement incliné sur l'horizontale, en s'abaissant vers l'extrémité de la cuve (2) pourvue du collecteur de vidange (12).

8. Friteuse électrique selon l'une quelconque des revendications 1 à 7, caractérisée en ce que la surface intérieure de la cuve (2) est recouverte d'un film anti-adhérent et excellent conducteur thermique.

9. Friteuse électrique selon la revendication 8, caractérisée en ce que la surface intérieure de la cuve (2) est recouverte d'un film à base de polytétrafluoréthylène (PTFE).

10. Friteuse électrique selon l'une quelconque des revendications 1 à 9, caractérisée en ce que la cuve (2) est entourée extérieurement d'un revêtement isolant thermique (3).

## Claims

1. Electric fryer, comprising a vessel receiving an oil bath and electric elements for heating the oil bath, the vessel (2) being produced by casting from a food-quality metal or alloy which is a good conductor of heat, such as aluminium, and this vessel having, at least internally, an entirely smooth surface which has no sharp edge, the electric heating elements (7) being embedded in the thickness of the wall (5) of the vessel (2), the walls of the said vessel (2) having, in the region of the base of this vessel (2), at least one part (5) of greatly increased thickness, in which the electric heating elements (7) are embedded, characterised in that the part of greatly increased thickness, receiving the electric heating elements (7), is in the form of a fixed or removable central block (5), projecting upwards from the base of the vessel (2), over substantially its entire length between two bottom walls (6) of rounded profile connecting the central block (5) to the sides (4) of the vessel (2), which is thus divided into two cooking areas (10).

2. Electric fryer according to Claim 1, characterised in that the central block (5) has at least one hollow (9), notably a hollow extending in the longitudinal direction.

3. Electric fryer according to Claim 1 or 2, characterised in that it comprises a drainage manifold (12) with two inlets (13) situated respectively on the two rounded bottom walls (6) which extend on each side of the central block (5), the manifold (12) surmounting a drainage valve (14).

4. Electric fryer according to any one of Claims 1 to 3, characterised in that the central block (5), in which the electric heating elements (7) are embedded, also houses means (15) of detecting and regulating the temperature of the oil bath and/or thermal safety means (16), functionally connected to the electric heating elements (7).

5. Electric fryer according to Claims 2 and 4 together, characterised in that the temperature detection and regulation means (15) and/or the thermal safety means (16) are housed in the longitudinal hollow (9) in the central block (5), and/or in special reservations.

6. Electric fryer according to Claim 5, characterised in that the temperature detection and regulation means (15) comprise a temperature detector with a temperature sensor (18) placed inside the longitudinal hollow (9) in the central block (5), the sensor (18) being fixed to a connecting piece (19) which is a good heat conductor, flush with the surface of the central block (5) and surrounded by an insulating annular spacer (20), the connecting piece (19) and spacer (20) fitting in a cavity in the central block (5).

7. Electric fryer according to Claim 3, characterised in that the drainage manifold (12) is situated towards one end of the vessel (2), the base of the said vessel (2) being slightly inclined to the horizontal, dropping towards the end of the vessel (2) which is provided with the drainage manifold (12).

8. Electric fryer according to any one of Claims 1 to 7, characterised in that the internal surface of the vessel (2) is covered with a non-stick film which is an excellent heat conductor.

9. Electric fryer according to Claim 8, characterised in that the internal surface of the vessel (2) is covered with a film based on polytetrafluoroethylene (PTFE).

10. Electric fryer according to any one of Claims 1 to 9, characterised in that the vessel (2) is surrounded externally by a heat-insulating cladding (3).

## Patentansprüche

1. Elektrische Friteuse, beinhaltend eine ein Ölbad aufnehmende Wanne und elektrische Widerstände zur Beheizung des Ölbades, wobei die Wanne (2) durch Gießen aus Metall oder einer Legierung lebensmittelzulässiger Qualität und mit guter Wärmeleiteigenschaft, wie beispielsweise Aluminium, hergestellt ist und diese Wanne zumindest innen eine vollständig glatte Oberfläche ist, die keinerlei scharfe Kanten aufweist und wobei die elektrischen Heizwiderstände (7) in der Dicke der Wandung (5) der Wanne (2) versenkt sind, wobei ferner die Wandungen dar genannten Wanne (2) im Bereich des Bodens dieser Wanne (2) mindestens einen Abschnitt (2) stark vergrößerter Dicke aufweisen, in dem elektrische Heizwiderstände (7) versenkt sind, **dadurch gekennzeichnet, daß** der die elektrischen Heizwiderstände (7) aufnehmende Abschnitt stark vergrößerter Dicke einen zentralen ortsfesten oder losbar angeordneten Block (5) bildet, der nach oben ausgehend vom Boden der Wanne (2) im wesentlichen über der ganzen Länge zwischen zwei unteren Wandungen (6) gerundeten Profiles vorspringt, die den zentralen Block (5) mit Seitenwänden (4) der Wanne (2) verbinden, die somit in zwei Kochzonen (10) geteilt ist.

2. Elektrische Friteuse nach Anspruch 1, **dadurch gekennzeichnet, daß** der zentrale Block (5) mindestens eine Aussparung (9), insbesondere eine sich in Längsrichtung erstreckende Aussparung, aufweist.

3. Elektrische Friteuse nach Anspruch 1 oder 2, **dadurch gekennzeichnet, daß** sie einen Entleerungssammler (12) mit zwei Einlässen (13) aufweist, die jeweils in den beiden unteren gerundeten Wandungen (6) liegen, die sich zu beiden Seiten des zentralen Blockes (5) erstrecken, wobei der Sammler (12) über einem Ablaßventil (14) liegt.

4. Elektrische Friteuse nach einem der Ansprüche 1-3, **dadurch gekennzeichnet, daß** der zentrale Block, in dem die elektrischen Heizwiderstände (7) versenkt sind, auch Mittel (15) zur Detektion und Regulierung der Temperatur des Ölbades und/oder Mittel (16) zur Gewährleistung der thermischen Sicherheit aufnimmt, die funktionell mit den elektrischen Heizwiderständen (7) verbunden sind.

5. Elektrische Friteuse nach der Gesamtheit der Ansprüche 2 und 4, **dadurch gekennzeichnet, daß** die Mittel (15) zur Detektion und Regulierung der Temperatur und/oder die Mittel (16) für die thermische Sicherheit in der Längsaussparung (9) des zentralen Blockes (5) und/oder in speziellen Freihaltungen angeordnet sind.

6. Elektrische Friteuse nach Anspruch 5, da**durch gekennzeichnet, daß** die Mittel (5) zur Detektion und Regulierung der Temperatur einen Temperaturdetektor mit einem Temperaturfühler (18) beinhalten, angeordnet im Inneren der Längsaussparung (9) des zentralen Blockes (5), wobei der Fühler (18) fest mit einem Einsatzstuck (19) mit guter Wärmeleitfähigkeit verbunden ist, der bündig in die Oberfläche des zentralen Blockes (5) eingelassen und von einem isolierenden ringförmigen Zwischenstück (20) umgeben ist, wobei das Einsatzstück (19) und das Zwischenstück (20) in einer Ausnehmung des zentralen Blockes (5) angeordnet sind.

7. Elektrische Friteuse nach Anspruch 3, **dadurch gekennzeichnet, daß** der Entleerungssammler (12) an einem Ende der Wanne (2) liegt und der Boden der Wanne (2) leicht geneigt zur Horizontalen ist und sich zu demjenigen Ende der Wanne (2) neigt, das mit dem Entleerungssammler (12) versehen ist.

8. Elektrische Friteuse nach einem der Ansprüche 1-7, **dadurch gekennzeichnet, daß** die innere Oberfläche der Wanne (12) mit einem Antihaftfilm mit exzellenter Wärmeleitfähigkeit bedeckt ist.

9. Elektrische Friteuse nach Anspruch 8, **dadurch gekennzeichnet, daß** die innere Oberfläche der Wanne (2) mit einem Film auf der Basis Polytetrafluorethylen (PTFE) bedeckt ist.

10. Elektrische Friteuse nach einem der Ansprüche 1-9, **dadurch gekennzeichnet, daß** die Wanne (2) außenseitig von einer wärmeisolierenden Verkleidung (3) umgeben ist.
